# FASCICULE DE BREVET EUROPEEN

(11) **EP 1 819 552 B1**
(45) Date de publication et mention de la délivrance du brevet: **04.03.2009**
(21) Numéro de dépôt: 05824083.9
(22) Date de dépôt: 01.12.2005
(51) Int. Cl.: B60R 16/02

(54) **DISPOSITIF ET PROCEDE DE COMMANDE D'UN VEHICULE**
VORRICHTUNG UND VERFAHREN ZUR FAHRZEUGSTEUERUNG
VEHICLE CONTROL DEVICE AND METHOD

(30) Priorité: 02.12.2004 FR 0452841
(43) Date de publication de la demande: 22.08.2007
(73) Titulaire: Renault SAS, 92100 Boulogne Billancourt (FR)
(72) Inventeur: POURADIER, Jean-Baptiste, F-91310 Montlhery (FR)
(86) Numéro de dépôt international: PCT/FR2005/051022
(87) Numéro de publication internationale: WO 2006/059045

(56) Documents cités:
- EP-A- 0 800 254
- DE-C2- 4 042 451
- US-A- 4 942 571
- US-A- 5 343 077
- US-A- 6 140 938
- US-A- 6 157 091
- US-A1- 2003 214 392

## Description

La présente invention concerne un dispositif et un procédé de commande d'un véhicule.

Un tel dispositif selon le préambule de la revendication 1 est connu du US 4 942 571 A.

Dans l'état de la technique, on a déjà décrit des dispositifs et des procédés de commande de véhicule dans lesquels le véhicule est activé par l'utilisation d'un système d'accès sans clef.

Parmi les différentes solutions connues, on connaît l'existence de boîtiers de télécommande ou d'identification échangeant des ondes radio ou infrarouges avec un contrôleur d'accès établi sur le véhicule.

L'utilisateur du véhicule est porteur d'un tel boîtier sous forme d'un badge ou d'un identifiant qui échange des informations selon un protocole déterminé de façon à déterminer l'accès au véhicule et à ses différentes fonctions ou ressources.

Particulièrement à cause des habitudes de commande de véhicule héritées de l'ancienne technique dans laquelle on utilisait une clef mécanique à la fois pour déverrouiller les ouvrants du véhicule, d'une part, et pour lancer une séquence de démarrage du véhicule, d'autre part, on a aussi proposé de combiner la technique d'accès sans clef avec l'utilisation d'un bouton de démarrage.

Afin notamment de reproduire les séquences de démarrage traditionnelles, on a proposé d'utiliser le bouton de démarrage, comme organe de commande général du véhicule, combiné ou non avec l'appui sur une pédale de frein ou sur une pédale d'embrayage de façon à distinguer l'opération de démarrage du groupe motopropulseur, d'autres opérations, notamment de mise sous tension des accessoires électriques.

Cependant, l'utilisateur du véhicule utilise un bouton de démarrage qui ne sert pas uniquement à la commande du groupe motopropulseur.

Au contraire, l'utilisateur met alors en fonction toutes les ressources consommatrices d'énergie électrique qui sont, de ce fait, reliées entre elles en bloc ainsi qu'on l'expliquera plus loin.

La présente invention apporte remède à cet inconvénient de l'état de la technique.

En effet, la présente invention concerne un procédé de commande de véhicule du type dans lequel l'accès au véhicule est contrôlé par un système d'accès sans clef.

Selon le procédé de l'invention, chaque ressource consommatrice d'électricité du véhicule est directement connectée à un organe de commande et /ou d'interprétation de la volonté du conducteur de sorte que chaque ressource associée à une commande soit indépendante des autres ressources.

L'invention concerne aussi un dispositif de commande de véhicule du type comportant un contrôleur d'accès sans clef au véhicule.

Selon un autre aspect de l'invention, l'étape de mise en fonctionnement d'au moins une ressource consommatrice d'électricité est précédée par une étape de test d'une autorisation d'accès au véhicule.

L'invention concerne aussi un dispositif de commande de véhicule qui comporte pour chaque fonction consommatrice d'électricité du véhicule :
- un organe de saisie de commande ou d'interprétation de la volonté du conducteur ;
- un calculateur de changement d'état de l'organe de commande pour requérir de la puissance électrique au réseau de bord ; et
- un actionneur ou effecteur de commande répondant au calculateur de changement d'état.

La mise en marche des accessoires n'est plus obtenue, moteur arrêté, par appui sur le bouton de démarrage.

D'autres avantages et caractéristiques de l'invention seront mieux compris à l'aide de la description et des figures annexées parmi lesquelles :
- les figures 1 et 2 sont des schémas représentant l'état de la technique ;
- la figure 3 est un schéma d'un mode particulier de réalisation de l'invention ; et
- la figure 4 est un organigramme répété pour chaque fonction commandée dans le véhicule.

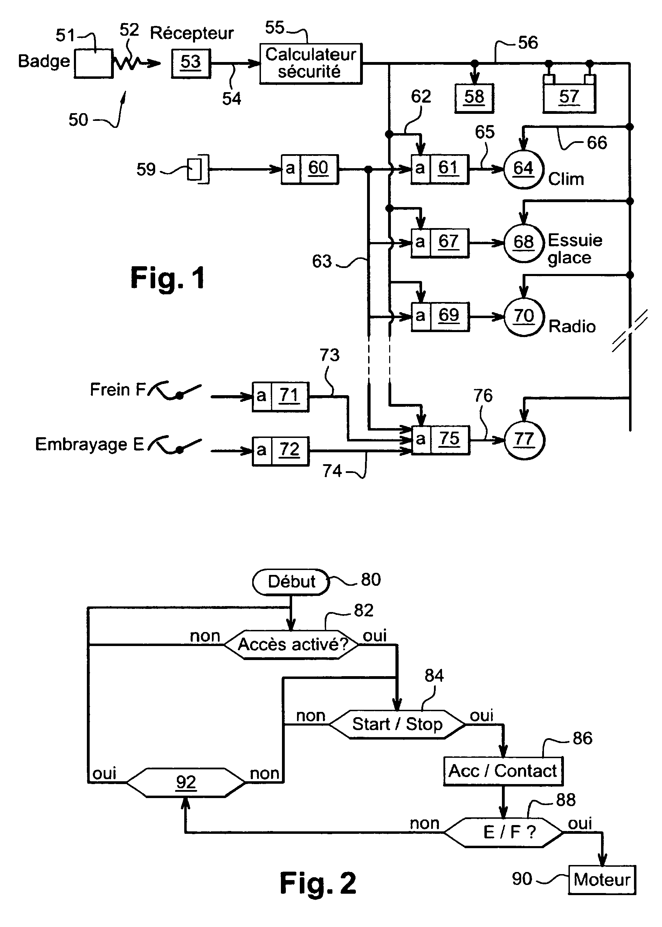

A la figure 1, on a représenté un exemple de réalisation de l'état de la technique par exemple mis en oeuvre dans le véhicule RENAULT MEGANE de type II.

Un système d'accès sans clef 50 est monté en relation avec le véhicule et son utilisateur et qui emporte au moins un objet portatif 51 comme un badge hyperfréquence. L'objet portatif 51 échange par un canal radio fréquence 52 des informations de contrôle d'accès avec un contrôleur embarqué 53 à bord du véhicule.

Lorsque la reconnaissance entre l'objet portatif 51 et le contrôleur embarqué 53 a été exécutée, un signal de validation d'accès au véhicule 54 est émis vers un calculateur de sécurité 55 qui déclenche alors les actions d'accès au véhicule. Ces actions ne sont pas concernées par la présente invention.

Parmi les actions de sécurité exécutées par le calculateur 55 se situe l'activation des différents calculateurs embarqués à bord du véhicule pour gérer les différents opérateurs et ressources de commande du véhicule et ne seront pas plus décrites.

Particulièrement, un tel véhicule de l'état de la technique comporte une batterie 57 qui coopère avec un superviseur 58 qui émet des informations d'état vers les différents calculateurs embarqués du véhicule.

Sur le tableau de bord du véhicule notamment, sont disposés des organes de saisie de commande comme un bouton poussoir 59 qui sert de bouton de démarrage et/ou d'arrêt du véhicule.

Le bouton de démarrage 59 est connecté à l'étage d'entrée a d'un calculateur de démarrage 60 qui interprète l'action sur le bouton de démarrage 59 de façon à fournir une information 63 d'activation des différents calculateurs des ressources commandées sur le véhicule.

Dans l'exemple de réalisation de la figure 1, on a représenté trois ressources consommatrices qui sont respectivement un dispositif de climatisation 64, un dispositif d'essuie-glace 68 et un poste de radio 70.

Chaque ressource consommatrice est commandée à l'aide d'un calculateur respectivement 61 pour la climatisation, 67 pour l'essuie-glace et 69 pour le poste de radio.

Chaque calculateur comporte un étage d'entrée référencé « a » qui reçoit notamment une commande de mise en service 63 du calculateur 60 de gestion du bouton de démarrage 59.

Il reçoit aussi un signal d'état 62 provenant du superviseur d'alimentation 58.

Bien entendu, chacune des ressources est aussi pilotée par son propre système de commande qui n'a pas été représentée ici, mais qui trouve la mise en action de la ressource commandée déjà faite par le seul actionnement du bouton 59 de démarrage.

Si en même temps que le bouton 59 est enfoncé, la pédale de frein F ou la pédale d'embrayage E est enfoncée, alors le calculateur 75 de contrôle du groupe motopropulseur produit une commande 76 de mise en marche du groupe motopropulseur 77.

Chaque ressource 64 pour la climatisation, 68 pour l'essuie-glace, 70 pour le poste de radio ou 77 pour le groupe motopropulseur est elle-même connectée au réseau électrique de bord 56 pour recevoir l'énergie électrique dont elle a besoin.

Particulièrement, l'étage d'entrée a du calculateur 75 est connecté à la messagerie d'état du superviseur d'alimentation 58, d'un part, ainsi qu'aux ordres de commande issus respectivement du calculateur 60 de prise en compte du bouton de démarrage 59, du signal de commande 73 issu du calculateur 71 associé à la pédale de frein et au signal 74 issu du calculateur 72 de prise en compte de la pédale d'embrayage.

Ces signaux sont combinés selon une logique propre qui s'exprime ici par : signal de commande 63 ET (signal de commande 73 OU signal de commande 74).

A la figure 2, on a représenté un organigramme du fonctionnement d'un dispositif de commande de l'état de la technique tel qu'il est représenté à la figure 1.

Après une étape de début 80, on exécute un test pour savoir si le système 50 d'accès sans clef est activé pendant un test 82.

Le test est répété tant que l'on se trouve en état d'attende.

Dès que le système 50 d'accès sans clef a validé l'accès au véhicule, on exécute le test de l'actionnement du bouton 59 de démarrage.

Tant que le test n'est pas positif, il est répété.

Quand le test est positif, on exécute alors une séquence qui consiste à alimenter tout d'abord les accessoires, puis ensuite, seulement à alimenter le contact par exemple lors d'un second appui. Ce second appui peut selon les réalisations connues ou bien donner le contact dans un véhicule à accès mains libres ou bien couper les accessoires dans d'autres véhicules.

On teste alors, lors d'une étape 88 si la pédale d'embrayage ou la pédale de frein est enfoncée et, dans le cas positif, on exécute le démarrage du groupe motopropulseur 90.

Dans le cas contraire, on vérifie si on se trouve dans le cas d'un deuxième enfoncement du bouton de démarrage 59 lors d'une étape 92, auquel cas, on repasse à l'étape de test d'activation du système d'accès sans clef de l'étape 82.

Dans le cas négatif, on recommence le test de l'enfoncement du bouton de démarrage de façon à passer à la deuxième étape du passage dite de "plus après contact".

On remarque qu'avec ce système de commande de l'état de la technique, l'alimentation est fournie par le réseau de bord à l'ensemble des ressources du véhicule dès le premier enfoncement du bouton de démarrage.

Dans certains véhicules haute gamme, le nombre extrêmement élevé de ressources consommatrices peut induire une consommation allant jusqu'à 50 ampères.

Par ailleurs, tous les calculateurs se trouvent ainsi en activité de manière liée.

La présente invention apporte justement un perfectionnement permettant, d'une part, de ne pas mettre sous tension des ressources qui n'en présentent pas l'utilité et, d'autre part, de rendre leurs mises en fonctionnement indépendantes les unes des autres.

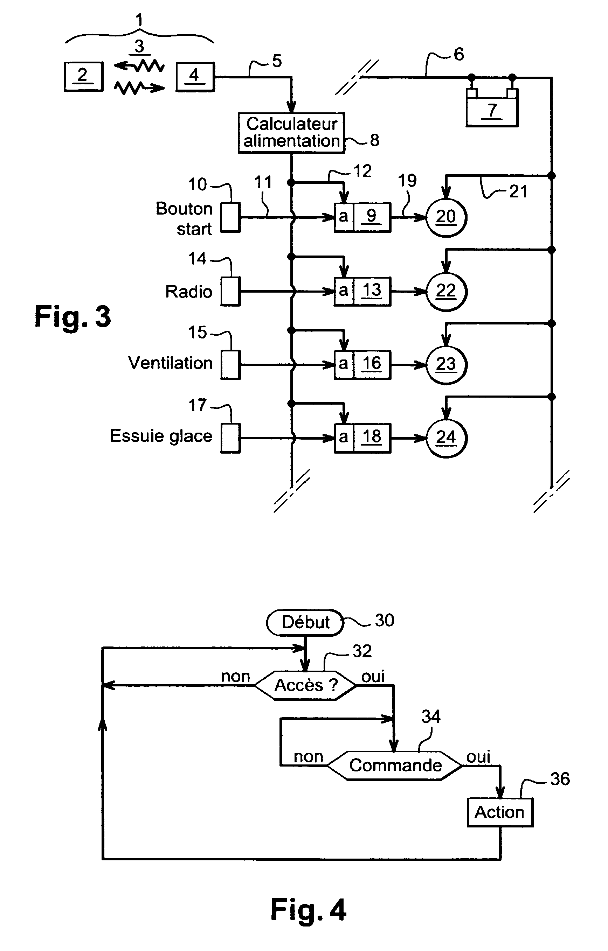

A la figure 3, on a représenté un mode de réalisation d'un dispositif de commande selon l'invention.

Un système d'accès sans clef 1 est composé d'au moins un badge 2 porté par un utilisateur qui échange par un canal radio fréquence 3 un signal d'accès au véhicule avec un contrôleur d'accès sans clef au véhicule 4 de sorte que quand la reconnaissance d'accès au véhicule a été prise en compte, un signal 5 d'autorisation est transmis à un calculateur ou superviseur d'alimentation 8.

Une batterie 7 est connectée au réseau de bord et peut être connectée à la demande à chaque ressource consommatrice commandée le dispositif de commande du véhicule.

A la figure 3, on a représenté quatre ressources consommatrices qui sont respectivement le groupe motopropulseur 20, le poste de radio 22, le groupe de climatisation 23 et le système d'essuyage 24.

Bien entendu, d'autres ressources consommatrices sont prévues selon les types de véhicule.

Chaque ressource peut être commandée par son propre organe de saisie de commande ou d'interprétation de la volonté du conducteur.

A cet effet, on a prévu un bouton de démarrage 10 qui produit un signal d'activation connecté à une entrée a d'un calculateur 9 de mise en route du véhicule.

Chaque étage « a » d'entrée des calculateurs 9, 13, 16 et 18 respectivement connectés aux ressources consommatrices 20, 22, 23 et 24 est connecté à une messagerie du superviseur d'alimentation 8 pour informer de l'état d'alimentation.

Par ailleurs, chaque effecteur associé à une ressource à commander, comme le bouton de démarrage 10, l'organe de commande de la radio 14, l'organe de commande de la climatisation 15 et l'organe de commande du système d'essuyage 17 est directement connecté à son étage d'entrée respectif.

De cette manière, l'appui sur le bouton de démarrage a seulement pour effet de connecter le réseau de bord sur le groupe motopropulseur 20 si le signal de commande 19 est issu du calculateur 9 lisant l'état du bouton de démarrage 10.

De même, le poste de radio 22 n'est connecté qu'à partir du moment où l'organe de commande du poste de radio est activé quelque soit l'état du bouton de démarrage et des autres organes, et ainsi de suite.

De cette manière, on assure que les différentes ressources commandées sont, d'une part, commandées de manière indépendante les unes des autres et, d'autre part, qu'elles ne tirent de l'énergie que lorsqu'elles sont réellement utilisées.

Particulièrement, la présente invention s'applique aussi si l'organe de commande n'est pas simplement à la disposition de l'utilisateur, mais qu'il est déclenché par un appel d'une autre ressource, comme un ordinateur de bord.

A la figure 4, on a représenté l'organigramme du fonctionnement de chaque calculateur associé à une ressource commandée tel qu'il a été représenté dans l'exemple de réalisation à la figure 3.

Après une étape de début 30, chaque calculateur teste si le système d'accès sans clef est toujours actif lors d'un test 32.

Si tel n'est pas le cas, le test 32 est répété. Dans d'autres modes de réalisation, la plupart des fonctions assurées par les ressources alimentées ne nécessitent pas l'authentification du badge ou carte du système d'accès. Seules ces ressources sont alors validées après l'authentification, les autres étant immédiatement contrôlables ;

Si le test 32 est positif, on teste alors l'état d'activation de l'organe de commande associé à la ressource contrôlée par l'organigramme lors d'une étape 34.

Si le test d'activation est positif, on réalise alors l'actionnement de la ressource lors d'une étape 36, et le contrôle retourne à la phase de test 32 de l'état d'accès sans clef.

## Revendications

1. Procédé de commande de véhicule qui consiste a exécuter (36) le contrôle de la mise en fonctionnement de chaque ressource consommatrice d'électricité du véhicule par le contrôle (34) de l'état d'un organe de commande et /ou d'interprétation de la volonté du conducteur de sorte que chaque ressource associée à une commande soit indépendante des autres ressources, **caractérisé en ce qu'**il consiste puis à exécuter la connexion d'une batterie (7) au réseau de bord à la demande de chaque ressource consommatrice commandée, de sorte qu'on ne mette pas sous tension des ressources qui n'en présentent pas l'utilité et que l'accès au véhicule est contrôlé par un système d'accès sans clef

2. Procédé selon la revendication 1, **caractérisé en ce que** l'étape de mise en fonctionnement d'au moins une ressource consommatrice d'électricité est précédée par une étape (32) de test d'une autorisation d'accès au véhicule.

3. Dispositif de commande de véhicule du type comportant un contrôleur (1) d'accès sans clef au véhicule, **caractérisé en ce qu'**il comporte pour chaque fonction consommatrice d'électricité du véhicule :
- un organe (10, 14, 15, 17) de saisie de commande ou d'interprétation de la volonté du conducteur ;
- un calculateur (9, 13, 16, 18) de changement d'état de l'organe (10, 14, 15, 17) de commande pour requérir de la puissance électrique d'un réseau de bord (6, 7), pour exécuter la connexion d'une batterie (7) au réseau de bord à la demande de chaque ressource consommatrice commandée; et
- un actionneur ou effecteur de commande (20, 22-24) répondant au calculateur de changement d'état qui lui correspond.

## Claims

1. Vehicle control method which consists in checking (36) the starting-up of each electricity-consuming resource of the vehicle by checking (34) the status of a unit for controlling and/or interpreting the wishes of the driver, such that each resource associated with a control is independent of the other resources, **characterized in that** it consists in connecting a battery (7) to the onboard network at the request of each controlled consuming resource, such that resources that are of no use to it are not powered up and that access to the vehicle is controlled by a keyless access system.

2. Method according to Claim 1, **characterized in that** the step for starting up at least one electricity-consuming resource is preceded by a step (32) for testing an authorization to access the vehicle.

3. Vehicle control device of the type comprising a keyless vehicle access controller (1), **characterized in that** it comprises, for each electricity-consuming function of the vehicle:
- a unit (10, 14, 15, 17) for entering controls or interpreting the wishes of the driver;
- a status transition computer (9, 13, 16, 18) for the control unit (10, 14, 15, 17) to call for electrical power from an onboard network (6, 7), to connect a battery (7) to the onboard network at the request of each controlled consuming resource; and
- a control actuator or effector (20, 22-24) responding to the status transition computer which corresponds to it.

## Patentansprüche

1. Verfahren zur Steuerung eines Fahrzeugs, das darin besteht, die Überwachung der Inbetriebnahme jedes stromverbrauchenden Betriebsmittels des Fahrzeugs durch die Überwachung (34) des Zustands eines Steuerorgans und/oder Interpretationsorgans des Willens des Fahrers durchzuführen (36), so dass jedes einer Steuerung zugeordnete Betriebsmittel von den anderen Betriebsmitteln unabhängig ist, **dadurch gekennzeichnet, dass** es darin besteht, die Verbindung einer Batterie (7) mit dem Bordnetz auf Anforderung jedes gesteuerten stromverbrauchenden Betriebsmittels durchzuführen, so dass keine Betriebsmittel unter Spannung gesetzt werden, die dies nicht benötigen, und dass der Zugang zum Fahrzeug von einem schlüssellosen Zugangssystem überwacht wird.

2. Verfahren nach Anspruch 1, **dadurch gekennzeichnet, dass** vor dem Schritt der Inbetriebnahme mindestens eines stromverbrauchenden Betriebsmittels ein Schritt (32) des Tests einer Zugangsberechtigung zum Fahrzeug liegt.

3. Fahrzeugsteuervorrichtung von dem Typ, die eine schlüssellose Zugangssteuerung (1) zum Fahrzeug aufweist, **dadurch gekennzeichnet, dass** sie für jede stromverbrauchende Funktion des Fahrzeugs aufweist:
- ein Organ (10, 14, 15, 17) zur Befehlseingabe oder zur Interpretation des Willens des Fahrers;
- einen Zustandsänderungsrechner (9, 13, 16, 18) des Steuerorgans (10, 14, 15, 17), um elektrische Leistung von einem Bordnetz (6, 7) anzufordern, um die Verbindung einer Batterie (7) mit dem Bordnetz auf Anforderung jedes gesteuerten stromverbrauchenden Betriebsmittels durchzuführen; und
- ein Steuer-Stellglied oder ein Steuer-Effektor (20, 22-24), das (der) auf den ihm entsprechenden Zustandsänderungsrechner reagiert.
